# EUROPEAN PATENT APPLICATION

(11) **EP 3 916 598 A1**
(43) Date of publication of application: **01.12.2021**
(21) Application number: 21175570.7
(22) Date of filing: 25.05.2021
(51) Int. Cl.: G06F 21/56, G06F 21/57

(54) **SYSTEM AND METHOD FOR DETECTING EXPLOITATION OF A VULNERABILITY OF SOFTWARE**

(30) Priority: 26.05.2020 EP 20176537
(71) Applicant: Argus Cyber Security Ltd, 6789155 Tel Aviv (IL)
(72) Inventor: Roth, Gilad, 90411 Nürnberg (DE); Ben Noon, Ofer, 90411 Nürnberg (DE); Einhorn, Raziel, 90411 Nürnberg (DE)
(74) Representative: Continental Corporation

(57) **Abstract**

A system and method for detecting exploitation of a vulnerability of software in a system may include associating a hook with the software by updating a configuration object in the system. A hook may be adapted to detect exploitation of a vulnerability of the software. An attempt to exploit a vulnerability may be logged.

## Description

### FIELD OF THE INVENTION

The present invention relates generally to detecting an attempt to exploit a vulnerability of software. More specifically, the present invention relates to dynamically installing a hook that detects an attempt to exploit a vulnerability of software without modifying the software.

### BACKGROUND OF THE INVENTION

Software units, modules, functions or systems may include, or suffer from, vulnerabilities. A vulnerability of software may be a weakness, flaw, or other aspect that exposes the software to exploitation by attackers. For example, publicly known cybersecurity vulnerabilities are listed in a Common Vulnerabilities and Exposures (CVE) dictionary or list that includes, for each known CVE, an identification, a description, and other information.

Protecting software systems from exploitation of vulnerabilities is typically a costly task. In order to identify vulnerabilities, some current or known systems and methods attempt to find whether a vulnerability exists in source-code or binaries. This approach is an off-board or offline approach centered at finding vulnerabilities during software production phase. The output of such solution may be an indication of a specific vulnerability code, but the output does not include an indication of whether or not the vulnerability is actually exploitable, nor does the output include an indication whether or not the vulnerability was indeed, or actually exploited in specific system or vehicle.

Other current or known systems include detection and/or protection of code-flow (also referred to in the art as control-flow integrity (CFI)). This approach is an on-board solution aimed at detecting specific types of vulnerabilities. Accordingly, this approach does not cover all types of vulnerabilities. In addition, the CFI approach requires developing and deploying protection in advance, and effects a large portion of code in components, resulting a high cost in terms of footprint and performance.

Generally, to protect a software unit from being exploited, current or known systems and methods include producing an updated software unit deploying the updated software. However, developing and testing an updated software is typically a costly task, in time as well as in other resources. Moreover, in many cases a vulnerability of a software unit may be discovered at a time when development and/or support of the software unit is no longer done or provided, e.g., in a case where the manufacturer of a component and/or software has terminated the relevant project.

Moreover, even if an updated software unit that addresses a vulnerability is produced, an update or deployment procedure may be a costly task, e.g., in the case of electronic control units (ECUs) in vehicles, updating software may require downloading software to millions of ECUs and/or a recall of vehicles. Accordingly, when a vulnerability is identified or discovered, knowing whether or not the vulnerability is (or was) indeed exploited maybe of great value to a provider, manufacturer or developer of a component or software.

Accordingly, there is a need in the art for a system and method that can efficiently identify exploitation of software vulnerabilities. There is a further need in the art for a system and method that can efficiently protect systems from vulnerabilities, either as a temporary measure until an updated software is available or as a permanent solution in case an updated software cannot be produced.

### SUMMARY OF THE INVENTION

An embodiment for detecting exploitation of a vulnerability of software in a system may include associating a hook with the software by updating a configuration object in the system. A hook may be adapted to detect exploitation of a vulnerability of the software. An event related to an attempt to exploit the vulnerability may be logged. An embodiment may include preventing the attempted exploitation. Preventing an attempt to exploit a vulnerability of a software may include at least one of: raising an exception by a hook, jumping to error handling code in a function, returning an error from a function, killing a process and sending a signal.

A hook may execute pre-tested, pre-installed and verified plurality of primitives included in the system. A system may be adapted to support a plurality of hooks, each with its own predefined logic adapted to detect a respective plurality of vulnerabilities.

An execution of a hook may be such that it does not change the state of the relevant (hooked) software. A hook may include one or more instructions that effect a state of the hook but do not effect the overall state of the software.

A first hook may execute a first set of pre-tested and pre-installed detection logic primitives included in a system and a second hook may execute a second set of pre-tested, verified and pre-installed detection logic primitives wherein at least one pre-tested, verified and pre-installed detection logic primitive is included in the first and second sets. Updating the configuration object may include at least one of: updating an address in the software, and indicating a set of one or more pre-tested, verified and pre-installed detection logic primitives.

A primitive may associated with at least one configuration parameter that may be provided to the primitive upon executing the primitive. A hook may maintain an internal state and a plurality of primitives executed by the hook may be adopted to modify the internal state. A hook may be associated with at least one of: kernel software and user space process. Logging an event related to an attempted exploitation of a vulnerability of a software may include sending an indication to a central hub. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3A shows content in a memory according to illustrative embodiments of the present invention;
Fig. 3B shows hooks associated with content in a memory according to illustrative embodiments of the present invention;
Fig. 3C shows content in a memory according to illustrative embodiments of the present invention;
Fig. 4 shows a system according to illustrative embodiments of the present invention; and
Fig. 5 shows a flow according to illustrative embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

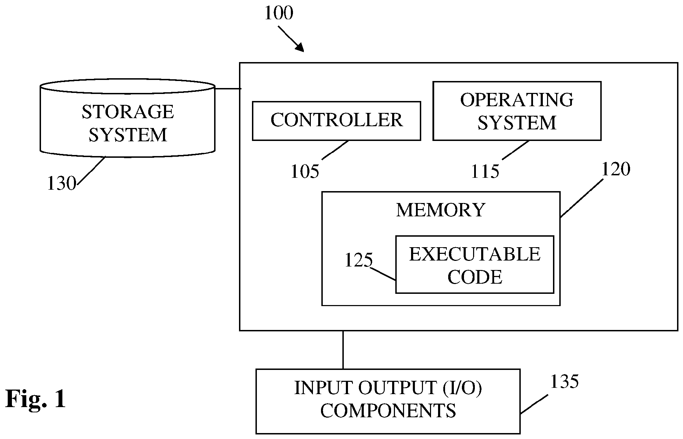

Reference is made to Fig. 1, showing a non-limiting, block diagram of a computing device or system 100 that may be used by, or included in, a system according to some embodiments of the present invention. For example, computing device may be an ECU installed in a vehicle, e.g., an ECU 250 as further described herein.

Computing device (or system) 100 may include a controller 105 that may a hardware controller. For example, computer hardware processor or hardware controller 105 may be, or may include, a central processing unit processor (CPU), a chip or any suitable computing or computational device. Computing system 100 may include a memory 120, an operating system (OS) 115, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

OS 115 may be or may include any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. OS 115 may be a commercial operating system, e.g., QNX or Linux.

Memory 120 may be a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be software, an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of operating system 115. For example, executable code 125 may be a hook or primitive associated with, or included in, an application, e.g., in an ECU, that detects exploitation of a vulnerability as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein. For example, a first executable code 125 in an ECU may be an application or function that includes, or suffers from, a vulnerability and a second executable code 125 in the ECU may be a hook or primitive that detects exploitation of the vulnerability.

Storage system 130 may be or may include, for example, a hard disk drive, a universal serial bus (USB) device, a flash memory or unit or any other suitable removable and/or fixed storage unit. In some embodiments, some of the components shown in Fig. 1 may be omitted. For example, in an ECU, storage system 130 may be a non-volatile memory (e.g., a flash memory) included in memory 120 of an ECU. Accordingly, although shown as a separate component, storage system 130 may be embedded or included in system 100, e.g., in memory 120.

I/O components 135 may be, may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 in an ECU may include a flash memory and a RAM), and a plurality of storage units. A system may additionally include other suitable hardware components and/or software components. In some embodiments, a system may include or may be, for example, a server computer, a network device and any number of devices, e.g., internet of things (IoT) devices, ECUs in a vehicle, e.g., ECUs included in a car, a train, a boat or an airplane.

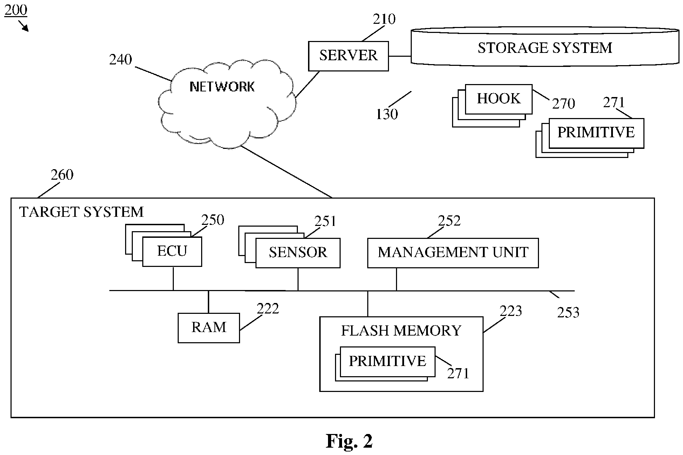

Reference is made to Fig. 2 which shows a system 200 according to illustrative embodiments of the present invention. As shown, system 200 may include a target system 260 that may include a plurality of ECUs 250, a plurality of sensors 251 and a management unit 252 and an in-vehicle network or bus 253. As further shown, target system 260 may include a RAM 222 and a flash memory 223. Although for the sake of clarity and simplicity, RAM 222 and a flash memory 223 are shown as separate units connected to in-vehicle network 253, it will be noted that RAM 222 units and/or a flash memory 223 units may be included in some or each of ECUs 250, in some or all sensors 251 and in management unit 252. RAM 222 may be, or may include components as described with respect to memory 120. While flash memory is mainly described or referred to herein, it will be understood that any electronic, non-volatile computer storage medium adapted to store digital data and/or be electrically erased and reprogrammed may be used instead of, or in addition to, flash memory 223. As shown, flash memory 223 may include primitives 271, e.g., primitives 271 may be stored, during production, in flash memory 223 or primitives 271 may be downloaded, from server 210 and stored in flash memory 223. Accordingly, primitives 271 are referred to herein as pre-installed primitives 271 in order to emphasize that new defined or created hooks 270 can use primitives 271 that are already included in a target system 260, that is, in some embodiments, to install a new hook 270, all that may be required is adding an entry to a configuration file in target system 260 without the need to download any new or additional executable code to target system 260.

Target system 260 may be any device, system, vehicle or any other applicable entity. For example, target system 260 may be, or it may be included or embedded in, an IoT device or a vehicle, e.g., an aircraft, car train or ship. Although vehicles such as cars are mainly described herein, other vehicles such as ships, trains and aircrafts are similarly applicable, it will be understood that the scope of the invention is not limited by the type, usage or nature of target system 260.

ECUs 250 and sensors 251 may be collectively referred to hereinafter as ECUs 250 and/or sensors 251 or individually as ECU 250 and/or sensor 251, merely for simplicity purposes. For example, a sensor 251 may be an oil pressure sensor, a temperature sensor and the like, e.g., when an embodiment is, or is included in, a train or car or other vehicle. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component. When an embodiment is included in an airplane, ship or spacecraft, a sensor 251 may be a unit that senses or measures, for example, elevation, acceleration, air speed or flow and the like.

In-vehicle network 253 may be any suitable network that enables ECUs 250, sensors 251 and management unit 253 to communicate or exchange digital information. In-vehicle network 253 may be, may include or may comprise any suitable network infrastructure and support any suitable protocol, e.g., Ethernet, CAN, IP, TCP and the like. Accordingly, numerous elements of in-vehicle network 253 are implied but not shown, e.g., switches, routers, gateways etc. It will be recognized that embodiments of the invention are not limited by the nature of in-vehicle network 253.

Network 240 may be any suitable network that enables server 21 and target device 220 to communicate or exchange digital information. Network 240 may be, may comprise or may be part of a private or public IP network, or the internet, or a combination thereof. Additionally, or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240. Server 210 may be a server as known in the art. As shown, server 210 may be operatively connected (e.g., directly or over a network) to a storage system 130.

As shown, storage system 130 may include hooks 270 and primitives 271 (collectively referred to hereinafter as hooks 270 or primitives 271 or individually as a hook 270 or a primitive 271, merely for simplicity purposes). Hooks 270 and primitives 271 may be any suitable digital data structures, constructs or computer data objects. For example, hooks 270 and primitives 271 may be, or may be stored in, files in storage system 130. Hooks 270 and primitives 271 may be, or they may include, executable code 125. For example, hooks 270 and primitives 271 may be executable code that can be executed by a controller 105 in an ECU 250 and/or in a sensor 251 and/or a controller 105 in management unit 252. Content in storage system 130 may be sent, downloaded or otherwise provided to components in target system 260. For example, hooks 270 and/or primitives 271 may be downloaded, sent or provided, e.g., over the air as known in the art, by server 210 to target system 260.

A hook as referred to herein (and as known in the art) may be code used to augment the behavior of software, e.g., software such as OS 115 or any applicable software functions, units or components as further described. For example, when installed as described, a hook 270 may intercept a software function call and perform some functionality prior to executing the function call. In other cases, a hook 270 may be activated after a function is completed or even as part of a function, application or program.

For example a hook 270 may intercept function calls, or a hook 270 may be activated before, during or after user or other applications are executed. A hook may intercept messages, respond to events, check values in specific addresses or registers and so on. For example, a hook 270 may intercept a message before it reaches an application or function, or it may intercept operating system calls in order to monitor behavior, context or state, check various elements (e.g., buffer sizes, stack overflow and the like).

A hook 270 may be, or it may include, executable code 125, script or program that adds a functionality to a program or function. For example, when added to, or associated with a function or program, a hook 270 may add a capability to the function or program, e.g., when a specific event or condition is detected or identified. For example, an event or condition that may be ignored by a software function may be detected or identified by a hook 270 and may be acted upon or responded to, by the hook 270 associated with the software function or by an entity to which the hook 270 reports. A hook 270 as referred to herein may be, or may include, a set of configuration parameters that indicate an address or location where the hook 270 is called, a set of primitives called or executed by the hook 270, a set of parameters provided to primitives and a return or output logic or values.

Primitives 271 may be, or they may include executable code 125. A primitive 271 may typically be a small, dedicated code that executes or provides a specific functionality. For example, a firs primitive 271 may check and/or report the size of a stack, a second primitive 271 may determine and/or report the size of a buffer, a third primitive may compare values in two addresses or registers, yet another primitive may read data from a memory address and so on. Although generally primitives 271 may be adapted to execute any logic, primitives 271 typically execute specific logic that can easily be tested. For example, primitives 271 may execute operations such as "ADD" which adds values in two or more addresses or registers, "SUBTRACT" which subtracts a first value from a second value, logical "AND" or "OR" which may be a bitwise operations as known in the art. Of course, any other operations may be performed by primitives 271, e.g., any operation performed by a controller 105 based on executable code 125 may be performed by a primitive 271.

It will be noted that there generally exists no limit to the number, types and functionalities of primitives 271 in a system. Primitives 271 may be tested, e.g., in offline and may be verified. For example, verification of a primitive may include verifying the primitive does not alter the state or functionality of any software component in a system. Accordingly, primitives 271 may be treated and used as a library of primitives and hooks 270 may be generated based on primitives 271. For example, a new hook 270 may be created by including, or listing, in the new hook 270, a subset of primitives 271 selected from a library or set of verified primitives 271.

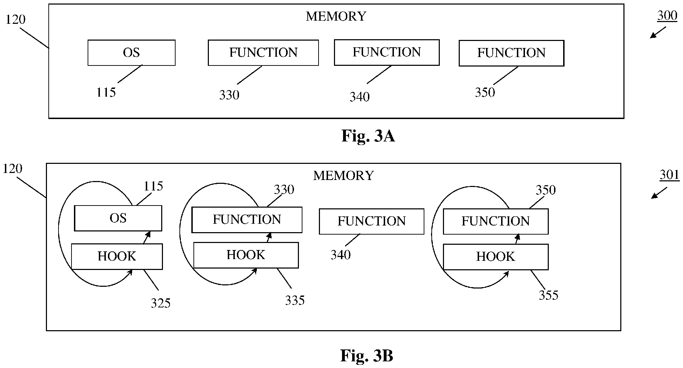

Reference is made to Fig. 3A, which shows a system 300 according to illustrative embodiments of the present invention. As shown, a system 300 may include a memory 120 that includes software components as further described. As shown, a memory 120 in system 300 may include an OS 115 and functions 330, 340 and 350. Typically, functions 330, 340 and 350 may be included (or hosted) in a process running under OS 115, accordingly, terminating function 330 as described herein may meant terminating the hosting process, causing function 340 to return an error may mean causing function 340 to return an error to the hosting process and so on.

For example, memory 120 shown in Fig. 3A may be a RAM or flash memory in an ECU 250 as described and OS 115 and functions 330, 340 and 350 may be, or they may be included in, an image installed in the ECU 250 (e.g., stored in flash memory 223) and may further be loaded into a RAM 222 and executed by a controller 105 in ECU 250. For example, function 330 may monitor a state of a component in a vehicle (e.g., periodically check oil pressure, or coolant temperature), function 340 may control and/or operate a Bluetooth unit, and function 350 send commands to a component (e.g., activate a fan).

Reference is made to Fig. 3B, which shows a system 301 according to illustrative embodiments of the present invention. As shown, a system 301 may include a memory 120 that includes software components as further described. For example, system 301 may be produced by installing hooks 270 in system 300. As shown, in addition to components included in system 300 as described, a memory 120 may include a hook 325 that may be associated with, linked or added to, OS 115, a hook 335 that may be associated with, linked or added to, function 330 and a hook 355 that may be associated with, linked or added to, function 350. As shown, hooks may be associated with functions that may be user-space (or user-mode) functions (e.g., function 330 may be a user-space application) and hooks may be associated with kernel-space or kernel-mode functions or routine (e.g., hook 325 may be associated with kernel-level or kernel-mode routines). Accordingly, using hooks as described, embodiments of the invention may detect and/or mitigate exploitation of vulnerabilities in kernel space and in user space.

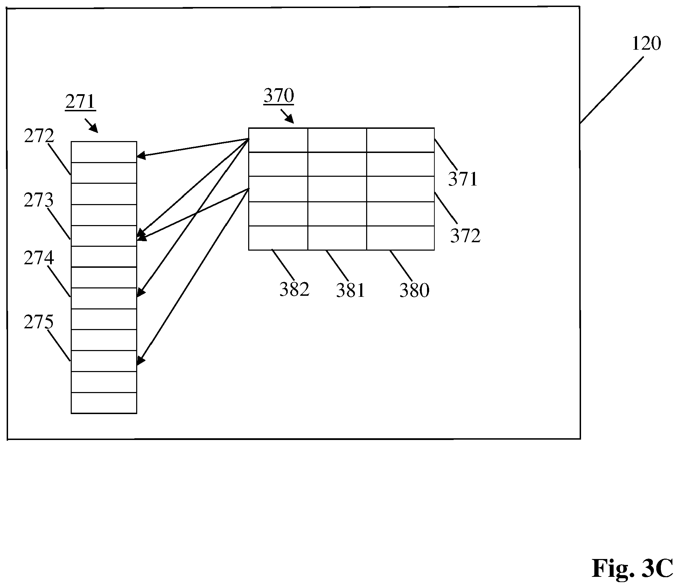

It will be noted that hooks 325, 335 and 355 may be respectively associated or linked with, or added to OS 115 and functions 330 and 350 without altering, modifying or otherwise changing OS 115 and functions 330 and 350. Adding, associating or linking a hook to/with a software may include, or be achieved by, a configuration of a system. For example, a configuration table (e.g., table 370 described with reference to Fig. 3C) may be updated such that whenever a function, routine or program is called or activated, while the function, routine or program runs, or after the function, routine or program is executed, a hook 270 is (and consequently, the primitives 271 associated with, or executed by, the hook 270 are) activated or executed. As illustrated in Fig. 3B, hooks may be selectively linked or associated with specific function.

Reference is made to Fig. 3C, which shows a memory 120 and content stored therein according to illustrative embodiments of the present invention. As shown, a memory 120 may include a set of primitives 271 including primitives 272, 273, 274 and 275. For example, primitives 272, 273, 274 and 275 may be downloaded to ECU 250 from server 210, may be stored in a flash memory 120 of ECU 250 and may further be loaded in a RAM 120 of ECU 250, e.g., upon boot or initialization of ECU 250. As further shown, a memory 120 of ECU 250 may include a configuration table 370 including a plurality of entries, e.g., entries 371 and 372 as shown. As further shown, each entry in configuration table 370 includes a set of fields 380, 381 and 382.

In some embodiments, entries in configuration table 370 may be used for configuring an execution of hooks 270 and/or execution of a set of primitives called or executed by a hook 270. For example, field 380 in each entry may include a location or offset (e.g., a relative offset in a function) where the relevant hook is to be added, included, called or activated. Field 381 in entries of configuration table 370 may include a set of parameters that are to be passed or provided to primitives 271. Field 382 may include a set and order of primitives to be executed when the relevant hook is called or activated.

For example, entry 371 in configuration table 370 may be related to hook 355, accordingly, field 380 in entry 371 may be an address or offset in function 350 where hook 355 is to be called, activated or jumped to. Remaining with the above hook 355 example, field 381 in entry 371 may include parameters that are to be provided to primitives 271, e.g., which registers are to be compared, which addresses are to be examined and the like. Still referring to the above hook 355 example, field 382 in entry 371 may include a set and order of primitives to be called or executed. For example, as illustrated by the arrows connecting field 382 of entry 371 with primitives 272, 273 and 274, when hook 355 is called it executes or runs primitives 272, 273 and 274. Similarly, when the hook configured by entry 372 (e.g., hook 335 or hook 325) is called it executes primitives 273 and 275 as illustrated by the arrows connecting field 382 of entry 372 with primitives 273 and 275.

In some embodiments, primitives 271 may be dynamically, on-the-fly and in real-time, downloaded to, and installed in, target system 260. For example, server 201 may download, e.g., over the air, primitives 271 to ECU 250 while ECU 250 is active, operational or running. In some embodiments, configuration table 370 may be dynamically, on-the-fly and in real-time, downloaded to, and installed in, target system 260. For example, server 201 may download, e.g., over the air to ECU 250, entries to be added to, or modified or updated in, configuration table 370 while ECU 250 is active, operational or running.

Accordingly, embodiments of the invention enable a quick and simple way of installing, adding, removing and modifying hooks that are used for detecting exploitation of vulnerabilities. For example, assuming a user (e.g., OEM or other entity) learns about a new vulnerability related to Bluetooth and further assuming that in order to exploit the new vulnerability, a hacker or attacker needs to copy a value from address 0xA to address 0xB or otherwise make sure the values in these two addresses are identical, that is, the values in addresses 0xA and OxB are normally different and, in order to exploit the new vulnerability, they need to be the same when the function that handles Bluetooth (e.g., function 340) reaches a specific step or performs a specific operation. In such case, in order to detect an attempt to exploit the new vulnerability using an embodiment of the invention, the user may define a new hook 270 that uses a primitive 271 which compares values stored in two address. Of course, a user may associate any number of primitives 271 with a hook 270 so that when the hook 270 is called, the set of primitives 271 are executed by the hook 270. The hook 270 configuration may include an indication of the addresses to be compared (e.g., 0xA and OxB in the current example) and the place (e.g., in the form of a relative address in function 340) where the hook 270 is to be called. Next, a new entry may be downloaded to target system 260 and added to configuration table 370 where field 380 in the new entry includes the relative address in function 340, field 381 includes addresses 0xA and 0xB and the primitive that compares values in addresses (e.g., primitive 275) is indicated in field 382 of the newly added entry in configuration table 370. From this point on, whenever function 340 reaches the relative address, a hook 270 is called, values in addresses 0xA and 0xB are compared and, if the values are identical, an embodiment may determine that an attempt to exploit the new vulnerability was made.

In some embodiments, the code that executes or runs a hook 270 is a simple code that generally calls or activates primitives 271 (which may be pre installed in target system 260 as described). More specifically, the code of a hook 270 extracts parameters from a field 381 in table 370 and provides the extracted parameters to primitives listed in field 382 of table 370 and possibly updates an 7 state. For example, primitives 271 may be designed such that they return a true/false boolean output that may be used by the hook's code to update an internal state of the hook.

Accordingly, in some embodiments, the same (or even identical) simple executable code 125 may be used for executing any number of hooks 270 installed in target system 260. For example, a field in an entry in table 370 (not shown for the sake of clarity and simplicity) may include expected return values received from primitives 271, and the same (or even identical) simple executable code 125 used for executing hooks 270 may be adapted to compare actual return values received from primitives 271 to expected values and thus determine whether or not an attempt to exploit a vulnerability is in progress. For example, in addition to selecting a set and order of execution of primitives 271 for a hook 270, a user may also select, define and set, in a configuration, expected return values, e.g., in the form of 0/1, Yes/No or TRUE/FASE or in the form of any other expected value or string. It will be noted that although typically a primitive 271 may return a numeric value, in some embodiments or cases a primitive 271 may return a string of characters, an address in memory 120 or any other value or data. Accordingly, using embodiments of the invention, by selecting primitives 271 and indicating expected return values, a user can select, define and set, for a hook 270, any set or combination of rules, conditions or criteria that indicate an attempted exploitation of a vulnerability. For example, a set of conditions indicating an attempted exploitation of a vulnerability may be: values in registers A and B are different and values in registers C and D are the same and the value in address 0xA is greater than the value in address OxB and so on. Such flexibility of configuration of exploitation detection of hooks 270, that can be installed in target systems without updating or installing new executable code is an advantage that cannot be provided by current or known systems and methods.

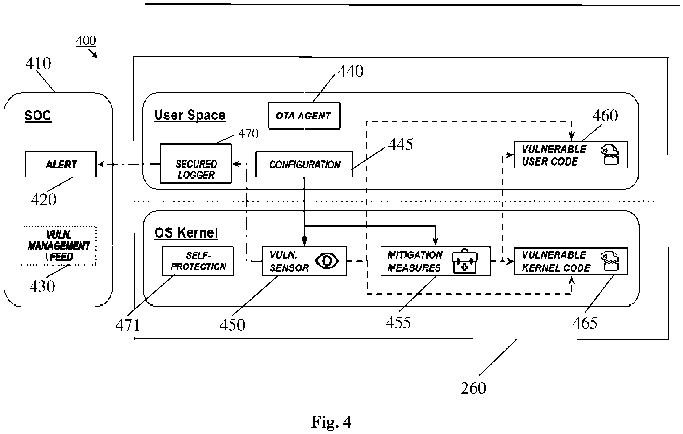

For example and as described, adding a hook 270 to target system 260 may only require adding an entry to table 370. In some embodiments, e.g., as described with reference to Fig. 4, upon a boot or initialization of target system 260, dedicated code may examine table 370 to identify which functions need to be associated with which hooks 270 and may, e.g., when loading functions' code into RAM, insert, in addresses indicated in entries 380 or table 370, small commands that cause a jump to hook 270 code. Accordingly, adding hooks 270 to (or associating hooks 270 with) functions or software units, removing (or disassociating) hooks 270 and/or modifying hooks 270 may all be done by embodiments of the invention with great ease, speed and simplicity and without jeopardizing the integrity of a target system, that is, without having to conduct heavy testing as is required by current or known systems when adding hooks or other software.

Evidently, enabling a system to detect attempts to exploit new vulnerabilities, as they are discovered, by merely adding an entry to a configuration table 370 in a target system is an improvement and advantage provided by some embodiments of the invention as it is fast and simple to implement by a user, cheap in resources and time, as well as safe with respect to software integrity since, as described, primitives 271 activated by hooks 270 do not change a state or other aspect of an original or core code of a target system. For example, in the above Bluetooth example, code and/or operation of function 340 is not changed nor is the state (e.g., stack, program counter or buffers) of function 340 effected by the addition or association of a hook 270 to function 340 as described.

Reference is made to Fig. 4, which shows a system 400 according to illustrative embodiments of the present invention. As shown, a system 400 may include a security operation center (SOC) 410 that may include an alert unit 420 and vulnerability management unit 430. For example, SOC 410 may be, or may be included in, server 210. Vulnerability management unit 430 may be used for managing over the air updates of target system 260. For example, based on user input (e.g., selection or definitions of hooks 270), vulnerability management unit 430 may download and/or update a configuration file (e.g., update table 370) and/or primitives 271 to over the air (OTA) agent 440. Configuration unit 445 may include any configuration data, e.g., configuration unit 445 may include configuration table 370. Information in configuration 445 may be used for associating hooks 270 with functions as described. Vulnerability sensor unit 450 may configure, control, activate and monitor hooks 270 based on information in configuration 445.

In some embodiments, vulnerability sensor unit 450 may dynamically set, configure, activate and control hooks 270. As described, hooks 270 may act as probes that sense or monitor events or conditions, e.g., events or conditions related to OS 115 or functions 330, 340 and 350. Vulnerability sensor unit 450 may be triggered when a specific vulnerability is exploited in target system 260 or even when an attempt to exploit the vulnerability is identified. For example, output from hooks 270 may be provided to vulnerability sensor unit 450 that may select an action based on input from hooks 270. For example, an action may include logging an event or mitigating an attempt to exploit a vulnerability as further described herein. Vulnerability sensor unit 450 may reside in the kernel of OS 115 and may include, or be associated with, subcomponents (e.g., agents) in user-space. Vulnerability sensor unit 450 may be configured based on data in configuration 445 that may reside in user-space. When an attempt to exploit a vulnerability is detected, vulnerability sensor unit 450 may deliver or report the event to a secured logger 470 in target system 260 and/or to mitigation unit 455. Accordingly, based on a configuration, target system may just log an event or target system 260 may respond to an event with one or more preventive actions, e.g., as described.

As illustrated, configuration 445 may reside in user-space and may thus be accessible to user-space processes or applications. For example, configuration 445 may be easily updated, e.g., the same way, or using methods similar to those used for updating configurations in or of ECUs 250. Information in configuration 445 may be used to control the behavior of vulnerability sensor unit 450. For example, the actions to be performed upon detecting an attempt to exploit each vulnerability may be listed in configuration 445 and, upon learning or identifying an attempt to exploit a vulnerability, sensor unit 450 may act based on listed actions. Mitigation unit 455 may execute different measures in response to different exploitations attempts, e.g., as indicated in configuration 445. Self-Protection unit 471 may be a unit designed and adapted to protect security units such as vulnerability sensor unit 450, configuration 445, secured logger 470, mitigation unit 455 etc. Secured logger 470 (or any other logging module) may deliver or report exploitation events or attempts to an external system, e.g., to SOC 410 thus enabling experts or analysts to examine or analyze events.

In some embodiments, hooks 270 may be associated or linked with vulnerable user code 460 and/or vulnerable kernel code 465. For example, a first hook 270 installed in system 400 may be hook 335, e.g., where function 330 is a user space or code function for which a vulnerability was discovered, and a second hook 270 installed in system 400 may be hook 355, e.g., where function 350 is a kernel space or code function for which a vulnerability was identified, discovered, published or detected. Secured logger 470 may receive messages from hooks and may report to alert unit 420 that may select an action when a report is received, e.g., an action may include logging a report, alerting a user and the like. Mitigation measures unit 455 may perform an action when an attempt to exploit a vulnerability is detected. For example, mitigation unit 455 may prevent a function from executing, reset an ECU, log an attempt and the like.

In some embodiments, detecting an attempt to exploit a vulnerability of software in a system may include associating a hook with the software by updating a configuration object in the system, e.g., a hook 270 may be adapted to detect exploitation of a vulnerability of software as described. In some embodiments, upon detecting an event that includes an attempt to exploit the vulnerability, an embodiment may log the event. For example, secured logger 470 may log an event. For example, an association of a hook 270 with a function may be achieved by identifying the function in table 370 as described. For example, when a hook is called from within a function at a specific address in the function, the specific address may be found in an entry 380 of table 370 thus an association of a hook with a function may be implemented or achieved.

As described, hooks 270 may be associated or linked with, or added to, software functions in target system 260 wherein the hooks 270 are adapted to identify or detect an attempt to exploit a vulnerability of the associated function or software. For example, assuming that due to a bug or careless programming, function 350 does not verify that a buffer for storing an incoming message is large enough for storing the message. Such bug or flaw may be used, by an attacker, to cause a buffer overflow and thus harm a system, accordingly, such bug or flaw is treated as a software vulnerability.

When such flaw is discovered, a user may create or define a hook 270 that uses a primitive 271 to compare the size of a received message with the size of a buffer where the message is to be stored. The hook may further include code that reports cases when the message size is greater than the buffer size. Next, the hook 270 may be installed in target system 260 (e.g., an entry may be added to table 370 as described) and may be linked, or associated with, function 350, e.g., the hook 270 may be called when function 350 receives a message and may generate an alert (or perform other actions) if/when the size of the buffer intended for storing a received message is not sufficiently large.

In some embodiments, an attempt to exploit a vulnerability may be prevented. For example, upon identifying an attempt to exploit a vulnerability, mitigation measures unit 455 may prevent the attempt. For example, remaining with the above buffer overflow example, if hook 355 determines that a received message cannot be stored in a destination buffer then hook 355 may report the event to mitigation unit 455 that may in turn terminate (e.g., using the Linux kill command to terminate a process that includes function 350. In other cases, e.g., instead of killing function 350, mitigation unit 455 may delete or truncate the received message to thus prevent it from being received by function 350 and thus preventing an exploitation of the buffer overflow vulnerability of function 350.

For example, in some embodiments, upon detecting a vulnerability is exploited (or is about to be exploited as described) one or more preventive actions may be taken. For example, upon detecting a vulnerability is (or is about to be) exploited, vulnerability sensor unit 450 (or mitigation unit 455) may prevent execution of the vulnerable function and return an error code, or check input to the vulnerable function and prevent execution of the function if the input is not as expected. In case a vulnerability is (or is about to be) exploited, e.g., on an ECU 250, one or more measures may be used against it by some embodiments of the invention. Examples of possible mitigation or preventive actions an embodiment (e.g., vulnerability sensor unit 450 or mitigation unit 455) may perform may be running a specific piece of code, e.g., code provided by a manufacturer or provider of a component or function (e.g., error handling code provided by an original equipment manufacturer (OEM), isolating a component, e.g., disconnecting an ECU 250 from network 253 and/or disconnecting network 253 from all WiFi, Bluetooth or other external networks, simulating a false behavior of the ECU 250, e.g., simulating a behavior of the ECU 250 which is different from the real behavior to thus fool an attacker into wrongly determining a state or behavior of the ECU 250 and/or perform a "Limp Home" procedure, e.g., as defined by an OEM.

In some embodiments, preventing exploitation of a vulnerability may include at least one of: raising an exception by a hook 270, jumping to error handling code in a function, returning an error from a function, killing a process and sending a signal. For example, vulnerability sensor unit 450 or mitigation unit 455 may be adapted to perform any of these actions upon identifying (or receiving a report of) an attempt to exploit a vulnerability of function 350, e.g., upon determining a message received by, or destined to, function 350 cannot by properly stored in a buffer of function 350, vulnerability sensor unit 450 or mitigation unit 455 may raise an exception that causes the kernel of a Linux OS 115 to take action, set a program counter of controller 105 to an error handling code in function 350, cause function 350 to return an error, kill a process and/or send or raise a signal to OS 115.

In some embodiments, a hook 270 executes detection logic. For example, a hook 270 may execute pre-tested and verified plurality of primitives 271 that may be pre-installed or included in a system (e.g., during a production of ECUs 250 or at any time prior to installing or configuring a hook 270 that executes the primitives 271). A hook 270 and/or detection logic (e.g., a set of primitives 271) invoked by a hook 270 may be updated, over the air, as part of a configuration update. For example, after being installed as described, hooks 270 may be updated, e.g., a number of primitives may be associated with an already installed hook 270 to thus update logic in/of the hook 270. For example, if a new vulnerability is discovered in function 350 then a new or additional primitive 271 may be sent, over the air, to target system 260 and the new primitive may be associated with hook 355 (e.g., via table 370 as described) such that if/when an attempt to exploit the newly discovered vulnerability is made, the (now updated) hook 355 will detect and enable reporting and/or preventing the attempted exploitation. Of course, in some cases, newly discovered vulnerabilities may be detected using primitives 271 already installed in a system, in such case, all that may be required in order to identify a newly discovered vulnerability may be associating a hook 270 with additional, already installed, primitives, e.g., by modifying an entry in table 370 in a configuration update procedure.

In some embodiments, a system may be adapted to support a plurality of hooks, each with its own predefined logic adapted to detect a respective plurality of vulnerabilities. For example, hook 355 may be a first hook adapted to detect an attempt to exploit a vulnerability related to buffer overflow in a first function (e.g., in function 350) as described, hook 335 may be a second hook adapted to detect an attempt to exploit a vulnerability related to stack overflow in a second function (e.g., in function 330) and so on.

In some embodiments, execution of a hook 270 (and or the associated primitives 271) does not change the state of the software with which the hook is associated. For example, although a hook 270 may include and maintain an internal state of the hook, the hook 270 and the primitives 271 it uses may be designed such that they never modify any parameter, state, memory, value or other aspect of the software with which the hook is associated. For example, hook 350 and primitives 271 may be designed such that they never change a state of function 350. In some embodiments, primitives 271 executed or called by a hook 270 may change the internal state of the calling hook 270. For example, an internal state of a hook 270 may reflect or indicate whether or not an attempt to exploit a vulnerability was detected, whether or not additional primitives 271 need to be called (e.g., if after executing a first primitive 271 it is determined that an attempt to exploit a vulnerability was detected then it may not be necessary to call additional primitives) and so on. In some embodiments, primitives 271 called by a hook 270 may update the internal state of the hook 270. For example, a primitive may modify the internal state of the calling hook 270 to reflect that an attempted exploitation of a vulnerability was detected, to pass information to a primitive 271 that will be called next and so on.

In some embodiments, a hook 270 may function as a transparent hook. In some embodiments, a hook 270 includes one or more instructions that effect a state (internal state) of the hook but do not effect the overall state of the software. For example, a hook 270 may be designed such that it does not change a state (or overall state) or functioning of the software or function with which it is linked or associated. Otherwise described, a function associated with a hook may not know an associated hook is executed (hence the hook is transparent to the function), and the function may thus run or execute unaware of the hook's presence or execution. Such transparency enables embodiments of the invention to install hooks without modifying functions in a target system. Accordingly, as oppose to known systems and methods, embodiments of the invention can record and/or mitigate exploitation of vulnerabilities of systems without requiring an update of the main or core software of the systems.

In some embodiments, a first hook 270 executes a first set of pre-tested and verified detection logic primitives 271 included in the system and a second hook 270 executes a second set of pre-tested and verified detection logic primitives. In some embodiments, at least one pre-tested and verified detection logic primitive 271 is included in the first and second sets. For example, as illustrated in Fig. 3C, the hook 270 executed according to entry 371 in table 370 uses primitives 272, 273 and 274 and the hook 270 executed according to entry 372 in table 370 uses primitives 273 and 275, accordingly, primitive 273 is used by two different hooks 270.

In some embodiments, updating a configuration object used for controlling execution of hooks 270 may include at least one of: updating an address in the software, and indicating a set of one or more pre-tested and verified detection logic primitives. For example, updating table 370 may include updating or inserting an address (e.g., a relative address) in function 330 where a hook 270 is to be called (e.g., the address may be stored in filed 380 as described) and including a set of pointers or references to primitives 271 in filed 382 as described. Accordingly, in some embodiments, updating a hook 270, inserting a new hook 270 or removing a hook 270 may be a simple and easy task that requires minimal effort, resources and time and, in addition, such task may be safe with respect to software integrity, that is, may not jeopardies the integrity of a system thus does not require testing of the system after it is done. Moreover, updating a hook 270, inserting a new hook 270 or removing a hook 270 may be done while a system is operational, up and running. Since, as described, updating a hook 270, inserting a new hook 270 or removing a hook 270 may be done without any influence on an operational, currently running ECU, such operations may be done while the ECU is operating. Accordingly, as oppose to current or known systems and methods that require replacing core code of components in order to install hooks in a system, embodiments of the invention enable installing hooks dynamically, on-the-fly, while a system is running.

In some embodiments, one or more primitives 271 may be associated with at least one configuration parameter. A parameter associated with a primitive 271 may be provided, to the primitive 271, upon executing the primitive 271. For example, a primitive 271 may be associated with a parameter (e.g., in the form of an address to read from, registers to compare and so on) via a field 381 in an entry in table 370 where a parameter to be passed or provided to the primitive 271 is recorded as described.

In some embodiments, a hook 270 may be associated with at least one of: kernel software and a user space process. For example, hook 325 may be associated with the kernel of OS 115 and hook 355 may be associated with a user space process 350. In some embodiments, logging an event may include sending an indication to a central hub regarding the detected event and/or logging the event locally, e.g., to the system logger of OS 115. For example, secured logger 470 may send an indication to SOC 410 as described or it may record the event locally, e.g., in flash memory 223 of ECU 250.

In some embodiments, detecting and mitigating exploitation of a security or software vulnerability may include generating a set of code primitives where a primitive may be adapted to cause a controller included in a target system to perform at least one action. For example, each primitive 271 may be, or may include code that causes a controller 105 in target system 260 to perform an atomic, well defined action. As a result, primitives 271 may be easy to debug and verifying that such simple primitives 271 do not interfere with an operation of components of a system (e.g., ECUs 250) may be greatly simplified. For example, each primitive 271 may be verified, on its own wherein the verification of primitives 271 may include determining that they do not interfere with an operation of the target system. A set of primitives may be associated with a vulnerability. For example, a primitive that checks a buffer and message size may be associated with a vulnerability related to buffer overflow as described herein. Association of primitives with vulnerabilities may include generating a hook by associating a set of primitives with the hook. Accordingly, using primitives and hooks may resemble using a scripting language where a hook may be viewed as script execution unit that uses verified and safe-to-use building blocks (the primitives 271). Thus, with a set or library of verified primitives, various scripts

(hooks) may be quickly created and deployed as described. For example, shortly after a user learns about a new vulnerability, a configuration object (e.g., table 370) that defines hooks adapted to detect and/or prevent exploitation of the new vulnerability may be created and provided, over the air, to target system 260.

Typically, a target system includes dedicated code adapted to cause the target system to perform a specific functionality. For example, ECUs 250 may each include dedicated code, e.g., as known in the art. As described, installing a configuration file and one or more hooks 270 or primitives 271, may be performed without altering the dedicated code. For example, installing hook 335 may be done without modifying function 330. Accordingly, enabling a target system 260 to detect attempts to exploit vulnerabilities may be done and/or achieved, by some embodiments, without requiring to generate an updated software version for ECUs 250 or other components of target system 260. As known in the art, generating, testing and deploying an updated software version (referred to in the art as image) for ECUs or other components is a long and expensive task, such task may be avoided using systems and methods according to some embodiments of the invention as described herein. Accordingly, embodiments of the invention enable a user to quickly, e.g., in a matter of hours or days, respond to newly discovered vulnerabilities and embodiments of the invention further guarantee that such response (e.g., in the form of adding an entry to a configuration file to thus add a hook 270 ad describe) does not alter or jeopardize the integrity of components (e.g., ECUs) in the field.

It is noted that a specific, same primitive 271 can be used by many, different hooks 270. Accordingly, following the scripting language and verified building blocks paradigm as described, embodiments of the invention enable a quick generation and deployment of detection and mitigation means in response to discovered vulnerabilities. For example, once a set of primitives 271 is installed in target system 260, adding an additional way of detecting an attempt to exploit a vulnerability may be achieved by only updating configuration 445 (or table 370)

In some embodiments, configuration 445 and/or hooks 270 and/or primitives 271 may be provided and installed while a system is up and running. For example, updating configuration 445 and installing a hook 270 and/or primitive 271 may be done while ECUs 250 and/or sensors 251 are operational (e.g., while a vehicle is traveling or an airplane is airborne). Such on-the-fly installing and configuring a system is achieved, at least in part, by the separation of hooks 270 and primitives 271 from the functions or software with which they are associated or linked as described. Accordingly, embodiments of the invention enable providing target system with means to combat exploitations of vulnerabilities in real-time or on the fly, that is, without requiring to suspend operation of the target systems, e.g., bring a car to service station.

Hooks 270 may be defined based on any relevant input or source. For example, any of: input from a manufacturer of target system 260 or a component therein, offline analysis of logs of a plurality of (possibly attacked) target systems 260 and publications of CVEs may be used as input or basis for designing, characterizing and/or creating configuration 445, table 370, hooks 270 and primitives 271. For example, based on a newly published CVE a set of primitives 271 or a hook 270 may be created such that they are usable for detecting an attempt to exploit the newly published CVE and the primitives 271 or a hook 270 may then be provided to target systems 260, e.g., over the air as known in the art.

In some embodiments, a configuration file (e.g., 445 or table 370) may include, for each vulnerability, a severity value and/or an action to performed (or primitives to be triggered or executed) upon detecting an exploitation of the vulnerability. An action performed upon detecting an attempt to exploit a vulnerability may be according to a severity value associated with the vulnerability. For example, a low severity value associated with a vulnerability may cause mitigation unit 455 to just record or log an attempt to exploit the vulnerability but a high severity value may cause mitigation unit 455 to terminate the relevant function. Accordingly, a response of target system 260 to an attempted exploitation of a vulnerability may be configurable, and thus a user may easily change a reaction or response of target system 260 to attempted exploitations of vulnerabilities. For example, it may be decided that a specific vulnerability is of low risk and thus system 260 may be configured (e.g., via a field in table 370) to only log attempts to exploit the vulnerability, however, at a later stage, e.g., after exploitations of the vulnerability cause accidents, it may be decided to raise the severity of the vulnerability such that it is mitigated or prevented when detected. To raise a severity of the exploitation, all that is required is to update an entry in table 370. Accordingly, in some embodiments, behavior, reaction or response of a system to attempts to exploit a vulnerability may be easily, quickly and readily modified without the need to update core or main code of the system or of components therein.

Embodiments of the invention improve the field of security. Specifically, embodiments of the invention improve the field of security with respect to in-vehicle networks and components as well as other embedded or dedicated systems, e.g., IoT devices and the like. For example, embodiments of the system enable identifying, recording, logging and reporting attempts to exploit vulnerabilities if software units or functions. Moreover, embodiments of the invention enable updating systems to detect exploitations, or attempts to exploit, of vulnerabilities as such vulnerabilities are discovered. Specifically, to enable remote or target systems to detect attempts to exploit newly discovered or revealed vulnerabilities, embodiments of the invention require a minimal update of configuration data and possibly downloading hooks as described but, unlike current or known systems and methods, to enable target systems to detect newly discovered, identified or published vulnerabilities, embodiments of the invention do not require massive, costly development and update of core, functional code of target systems. For example, to detect a newly identified vulnerability, an original code of an ECU needs not be changed, rather, as described, providing configuration data to configuration 445 and/or a hook 270 may suffice in order to enable an ECU 250 in target system 260 to detect attempts to exploit a vulnerability that was discovered long after the ECU 250 has been developed and deployed. The ability to configure a system (e.g., an ECU) to detect newly discovered vulnerabilities without the need to update the dedicated code of the system is an advantage that will be readily appreciated by those familiar with the costs and time involved in updating code of systems such as in-vehicle networks.

Yet another advantage of some embodiments is the ability to determine whether or not a vulnerability has actually been exploited. Since the cost of updating systems is typically very high, knowing whether or not a vulnerability has been exploited may be extremely valuable to an OEM or other manufacturer or provider of systems and components as such information may enable an OEM to devise a risk mitigation plan and allocate resources, e.g., it may be the case that although a vulnerability has been identified, if it has not been exploited, an OEM may decide to postpone (or even avoid) developing software and/or updating components in order to mitigate or eliminate the vulnerability. As described, embodiments of the invention enable quickly, and relatively cheaply, determining and reporting if (whether or not), when, where, how many times, in which vehicles and/or in how many systems, a vulnerability has actually been exploited and/or determining and reporting if (whether or not), when, where, how many times, in which vehicles and/or in how many systems attempts to exploit a vulnerability have been made.

For example, a report provided, e.g., by SOC 410 to an OEM may include, for a specific vulnerability, if, when, where, how many times, in which vehicles and/or in how many systems, the specific vulnerability has actually been exploited. When (or right before) reporting to SOC 410, secured logger 470 may collect information from any component in target system 260 and may add collected information to the report. For example, secured logger 470 may get, e.g., from a GPS unit, the exact location of a vehicle, may get, e.g., from a Wifi unit, the number and type of devices connected to an in-vehicle Wifi network, or secured logger 470 may add to the report information identifying the vehicle (e.g., type, model, manufacturing date and the like). Provided with reports from a possibly large number of vehicles or systems, SOC 410 may provide valuable reports to a user. For example, a report may indicate where an attack is taking place, what are the common conditions of attacked systems and so on. Such reports may enable a user to devise a mitigation plan, e.g., if an exploitation of a vulnerability is localized then a user (e.g., OEM) may decide to only update vehicles in a specific area.

Yet another advantage of some embodiments is the configurability. As described, as oppose to current and known systems and methods in which detecting exploitation of newly discovered vulnerabilities requires developing and testing code and further updating and/or replacing great portions (if not all) dedicated code in systems (e.g., replacing an image of ECUs, a costly and time consuming process), to enable a target system to detect exploitation attempts of newly discovered vulnerabilities, a simple, quick and relatively cheap process of updating a configuration 445 and/or downloading a hook 270 or primitive 271, without otherwise modifying or touching other code in ECUs may suffice.

Yet another advantage related to configurability provided by some embodiments is related to preventing and/or mitigating exploitation of vulnerabilities. For example and as described, by downloading a hook 270 and/or modifying configuration 445, a response of a target system 260 to attempted exploitations of a vulnerability may be set. Accordingly, embodiments of the invention provide a relatively cheap, simple and fast way of adapting systems to overcome vulnerabilities as the vulnerabilities are discovered or made known.

Yet another improvement or advantage is related to real-time. For example, secured logger 470 may report an attempt to exploit a vulnerability in real-time, as an attempt is identified thus embodiments of the invention enable a user to react to attacks in real time. Yet another improvement and advantage provided by some embodiments is related to the configurability and dynamicity of systems and methods according to embodiments of the invention. Since detecting attempts to exploit a vulnerability can be updated by merely updating configuration 445 and/or downloading small code segments (e.g., hooks 270 and/or primitives 271), embodiments of the invention do not require a-priori knowledge of vulnerabilities, e.g., vulnerabilities detected as described may not be known at the time of ECUs development or production. For example, as described, a target system 260 may by remotely configured long after production of ECUs, e.g. while a vehicle is already on the road.

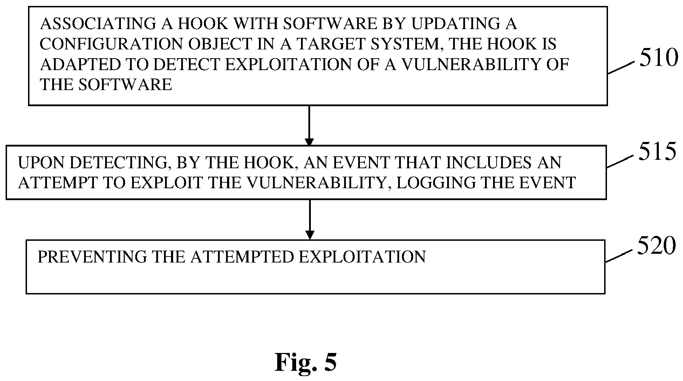

Reference is made to Fig. 5 which shows a flow according to illustrative embodiments of the present invention. As shown by block 510, a hook may be associated with a software in a target system, wherein the hook is adapted to detect exploitation of a vulnerability of the software. For example, table 370 may be used to associate hook 335 with software, e.g., with the software of function 330 as described. As shown by block 520, an event that includes an attempt to exploit the vulnerability of the software may be logged. For example, secured logger 470 may log an event that includes an attempt to exploit a vulnerability as described. As shown by block 530, an attempt to exploit a vulnerability of a software may be prevented. For example, mitigation measures unit 455 may prevent or mitigate an attempt to exploit a vulnerability of a software as described.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method of detecting exploitation of a vulnerability of software in a system, the method comprising:
associating a hook (270) with the software by updating a configuration object (370) in the system, wherein the hook is adapted to detect exploitation of a vulnerability of the software; and
upon detecting an event that includes an attempt to exploit the vulnerability, logging the event.

2. The method of claim 1, comprising preventing the attempted exploitation.

3. The method of claim 2, wherein the preventing includes at least one of: raising an exception by the hook, jumping to error handling code in a function, returning an error from a function, killing a process, sending a signal.

4. The method of claim 1, wherein the hook executes pre-tested and verified plurality of primitives included in the system.

5. The method of claim 1, wherein the system is adapted to support a plurality of hooks, each with its own predefined logic adapted to detect a respective plurality of vulnerabilities.

6. The method of claim 1, wherein execution of the hook does not change the state of the software.

7. The method of claim 1, wherein the hook includes one or more instructions that effect a state of the hook but do not effect the overall state of the software.

8. The method of claim 1, wherein a first hook executes a first set of pre-tested and verified detection logic primitives included in the system and a second hook executes a second set of pre-tested and verified detection logic primitives and wherein at least one pre-tested and verified detection logic primitive is included in the first and second sets.

9. The method of claim 1, wherein updating the configuration object includes at least one of: updating an address in the software, and indicating a set of one or more pre-tested and verified detection logic primitives.

10. The method of claim 4 wherein at least one of the plurality of primitives is associated with at least one configuration parameter provided to the primitive upon executing the primitive.

11. The method of claim 5 wherein the hook maintains an internal state and wherein the plurality of primitives are adopted to modify this internal state.

12. The method of claim 1 wherein the hook is associated with at least one of: kernel software and user space process.

13. The method of claim 1 wherein logging the events includes sending an indication to a central hub regarding the detected event.

14. A computer program (125) comprising instructions which, when executed by a controller (105), cause the controller (105) to implement any of the methods of claims 1-13.

15. A system comprising:
a memory (120); and
a controller (105) configured to perform any of the methods of claims 1-13.
